# EUROPÄISCHE PATENTSCHRIFT

(11) **EP 4 603 801 B1**
(45) Veröffentlichungstag und Bekanntmachung des Hinweises auf die Patenterteilung: **31.12.2025**
(21) Anmeldenummer: 24157649.5
(22) Anmeldetag: 14.02.2024
(51) Int. Cl.: G01D 5/347

(54) **OPTISCHER ENCODER**
OPTICAL ENCODER
CODEUR OPTIQUE

(43) Veröffentlichungstag der Anmeldung: 20.08.2025
(73) Patentinhaber: SICK AG, 79183 Waldkirch (DE)
(72) Erfinder: Sellmer, Christian, 78166 Donaueschingen (DE); Zwölfer, Christian, 79183 Waldkirch (DE)
(74) Vertreter: Manitz Finsterwald Patent- und Rechtsanwaltspartnerschaft mbB

(56) Entgegenhaltungen:
- EP-A1- 1 995 567
- EP-A2- 1 788 361
- WO-A2-2012/075511
- DE-A1- 102016 114 483
- DE-A1- 102020 119 511
- US-A1- 2005 023 450
- US-A1- 2010 171 028
- US-A1- 2013 292 706

## Beschreibung

Die Erfindung betrifft einen optischen Encoder und ein Verfahren zur Herstellung eines optischen Encoders.

Die Druckschrift EP 1 788 361 A2 offenbart einen optischen Encoder gemäß dem Oberbegriff des Anspruchs 1 und ein Verfahren zur Herstellung des optischen Encoders gemäß dem Oberbegriff des Anspruchs 14. Die Druckschriften DE 10 2016 114483 A1, US 2005/023450 A1, US 2010/171028 A1, US 2013/292706 A1, EP 1 995 567 A1 und WO 2012/075511 A2 offenbaren verwandte Encoder und Verfahren.

Herkömmliche lineare oder rotative optische Encoder umfassen einen Sensorkern, welcher eine Lichtquelle (Light-Emitting-Diode LED), eine Codescheibe und mehrere Photodioden umfasst. Man unterscheidet zwischen transmissiven und reflexiven optischen Encodern, wobei transmissive Encoder auch als Encoder bezeichnet werden, die auf dem Prinzip des Schattenwurfs basieren. Bei optischen Encodern dieser Bauart wird ein Teil des von der Lichtquelle ausgesandten Lichts an der Codescheibe reflektiert und dann von den Photodioden des Sensorkerns erfasst. Die Lichtquelle und die Photodioden sind räumlich getrennt voneinander angeordnet und zueinander ausgerichtet. Aus Effizienzgründen ist die Lichtquelle üblicherweise aus einem Halbleitermaterial mit direkter Bandlücke (wie zum Beispiel GaAs, AlGaAs, GaP, etc.) gefertigt, während die Photodioden aus einem indirekten Halbleitermaterial (wie zum Beispiel Silizium) hergestellt sind. Es ist folglich eine Vielzahl von Produktionsschritten notwendig, um die Lichtquelle und die Photodioden im Sensorkern zu integrieren.

Es ist daher eine Aufgabe der Erfindung, einen wirtschaftlicheren und kompakteren optischen Encoder und ein wirtschaftlicheres Verfahren zur Herstellung eines optischen Encoders bereitzustellen.

Diese Aufgabe wird erfindungsgemäß durch die Merkmale des Anspruchs 1 gelöst.

Insbesondere wird die Aufgabe gelöst durch einen optischen Encoder umfassend einen ersten Teil und einen zweiten Teil, welche relativ zueinander bewegbar sind. An dem ersten Teil ist eine Codierung angeordnet. An dem zweiten Teil ist zumindest eine Sendeeinheit angeordnet, die dazu ausgebildet ist, Messlicht in Richtung der Codierung zu senden. An dem zweiten Teil ist des Weiteren zumindest eine Empfangseinheit angeordnet, die dazu ausgebildet ist, Messlicht, das von der Sendeeinheit ausgesandt und von zumindest einem Teil der Codierung reflektiert wurde, zu empfangen und auf Basis des empfangenen Messlichts ein Messsignal zu erzeugen und auszugeben. Der optische Encoder umfasst ferner eine Auswerteinheit, die dazu ausgebildet ist, auf Basis des ausgegebenen Messsignals eine Relativposition zwischen dem ersten und dem zweiten Teil zu ermitteln. Die Sendeeinheit und die Empfangseinheit sind auf demselben Halbleiter-Substrat angeordnet. Insbesondere können die Sendeeinheit und die Empfangseinheit auf genau einem Halbleiter-Substrat angeordnet sein.

Die Sendeeinheit, die Empfangseinheit und das Halbleiter-Substrat bilden also eine einstückige oder mehrstückige Einheit. Das heißt, auch ein separates Bauteil, wie später erläutert, das nicht einstückig mit dem Halbleiter-Substrat ausgebildet ist, aber z.B., insbesondere direkt, an oder auf dem Halbleiter-Substrat angebracht ist, ist als "auf demselben Halbleiter-Substrat angeordnet" zu verstehen.

Das Halbleiter-Substrat ist zum Beispiel ein Die oder (Nackt-)Chip. Ein Die kann aus einem fertig prozessierten Halbleiter-Wafer durch Sägen oder Brechen gewonnen werden. Unter "fertig prozessiert" ist gemeint, dass auf dem Halbleiter-Wafer eine Mehrzahl von Bereichen ausgebildet ist, die jeweils zumindest eine Sendeeinheit und zumindest eine Empfangseinheit der vorgenannten Art aufweisen, wobei nach dem Sägen oder Brechen des Halbleiter-Wafers jeder der Bereiche einem Die entspricht.

Das Halbleiter-Substrat kann eine rechteckige, insbesondere quadratische, Form und/oder eine Fläche von kleiner als 100 mm², insbesondere kleiner als 50 mm², insbesondere kleiner als 25 mm², insbesondere kleiner als 10 mm², aufweisen.

Auf dem Halbleiter-Substrat kann eine Passivierungsschicht zum Schutz der (optisch aktiven) Komponenten des Sensorkerns aufgebracht sein, welche transparent für das Messlicht ist.

Ferner ist eine Ausgestaltung möglich, bei der der zweite Teil eine Leiterplatte oder PCB (engl.: "printed circuit board") umfasst, und das Halbleiter-Substrat auf die Leiterplatte befestigt ist, beispielsweise gebondet und/oder aufgeklebt (z.B. mittels eines Epoxidharzes). Das heißt, die Leiterplatte und das Halbleiter-Substrat sind über elektrische Leitungen zum Datenaustausch und/oder zur Energieversorgung der Komponenten des Sensorkerns miteinander verbunden. Insbesondere kann die Leiterplatte weitere elektronische Komponenten wie zum Beispiel eine Energieversorgungseinheit zum Versorgen der Komponenten des Sensorkerns, insbesondere der Sendeeinheit und der Empfangseinheit, mit Energie, und/oder einen Analog-Digital-Umsetzer zum Digitalisieren analoger Messsignale, umfassen. Die Leiterplatte kann als bewegliche Trägerscheibe für den Sensorkern fungieren, welche relativ zu dem ersten Teil bewegbar ist, oder auf einer weiteren, relativ zu dem ersten Teil bewegbaren Scheibe aufgebracht sein.

Durch die Integration von Sende- und Empfangseinheit auf demselben Chip bzw. Halbleiter-Substrat kann der Sensorkern platzsparender ausgebildet werden und die Anzahl der für die Herstellung des optischen Encoders notwendigen Produktionsschritte kann verringert werden. Insbesondere können Produktionskosten, die bei der separaten Herstellung von Sendeeinheit und Empfangseinheit und bei der Ausrichtung der Sendeeinheit in Bezug auf die Empfangseinheit entstehen, entfallen. Der erfindungsgemäße optische Encoder ist daher besonders kompakt und wirtschaftlich.

Weitere Ausführungsformen sind in den Ansprüchen, der Beschreibung und den beigefügten Zeichnungen angegeben.

Gemäß einer Ausführungsform umfasst der optische Encoder ferner einen Analog-Digital-Umsetzer der zuvor genannten Art, der dazu ausgebildet ist, analoge Messsignale zu digitalisieren. Die analogen Messignale können von mehreren Sensoren der Empfangseinheit beim Empfangen des reflektierten Messlichts erzeugt werden. Der Analog-Digital-Umsetzer kann ein integraler Bestandteil der Auswerteeinheit oder ein separates, das heißt baulich getrennt von der Auswerteeinheit angeordnetes Bauteil des optischen Encoders sein.

Das Halbleiter-Substrat und die Sendeeinheit bestehen im Wesentlichen aus einem indirekten Halbleitermaterial, insbesondere Silizium und/oder Germanium. Die Empfangseinheit kann im Wesentlichen aus demselben Material wie das Halbleiter-Substrat und die Sendeeinheit bestehen oder dieses umfassen. Der Ausdruck "im Wesentlichen" schließt Abweichungen von ± 5 % ein. Insbesondere umfasst die Sendeeinheit kein direktes Halbleitermaterial wie z.B. GaAs, AlGaAs oder GaP.

Gemäß einer alternativen Ausführungsform umfasst das Halbleiter-Substrat, die Sendeeinheit und/oder die Empfangseinheit ein (direktes) III-V-Halbleitermaterial wie z.B. GaAs, GaP und/oder AlGaAs. Bevorzugt bestehen das Halbleiter-Substrat, die Sendeeinheit und/oder die Empfangseinheit im Wesentlichen daraus.

Gemäß einer weiteren Ausführungsform umfasst das Halbleiter-Substrat, die Sendeeinheit und/oder die Empfangseinheit ein II-VI-Halbleitermaterial wie z.B. ZnO, ZnS, ZnSe, ZnTe, CdS, CdSe und/oder CdTe. Bevorzugt bestehen das Halbleiter-Substrat, die Sendeeinheit und/oder die Empfangseinheit im Wesentlichen daraus.

Gemäß einer Ausführungsform sind das Halbleiter-Substrat, zumindest ein Teil der Sendeeinheit und/oder zumindest ein Teil der Empfangseinheit monolithisch ausgebildet, das heißt sie sind über eine zusammenhängende Kristallstruktur miteinander verbunden. Beispielsweise sind das Halbleiter-Substrat, eine LED der Sendeeinheit und/oder eine, mehrere oder alle Sensoren (oder Photodioden) der Empfangseinheit monolithisch ausgebildet.

Gemäß einer Ausführungsform sind zumindest ein Teil der Sendeeinheit und/oder zumindest ein Teil der Empfangseinheit in einem selben Halbleiter-Fertigungsprozess, insbesondere einem CMOS-Prozess (Complementary Metal-Oxide-Semiconductor-Prozess), hergestellt. Beispielsweise sind eine LED der Sendeeinheit und/oder eine, mehrere oder alle Photodioden der Empfangseinheit in einem selben Standard-CMOS-Prozess hergestellt. Es ist zum Beispiel möglich, dass zumindest ein Teil der Sendeeinheit und zumindest ein Teil der Empfangseinheit in einem selben Produktionsprozess ionenimplantiert sind. Der CMOS-Prozess kann ein top-down oder bottom-up-Prozess sein. Der CMOS-Prozess kann optische Lithographie, das Abscheiden von Halbleiterschichten, das Abscheiden von Oxiden, das Abscheiden von Metallschichten, Dotierverfahren, nachchemisches Ätzen, Trockenätzen, etc. umfassen. Dadurch kann die Anzahl an Produktionsschritten erheblich reduziert werden, was sich positiv auf die Herstellungskosten auswirkt.

Gemäß einer Ausführungsform weisen zumindest ein Teil der Sendeeinheit und zumindest ein Teil der Empfangseinheit zumindest ein gemeinsames Layer des Halbleiter-Substrats auf. Das bedeutet zumindest ein Teil der Sendeeinheit und zumindest ein Teil der Empfangseinheit liegen in derselben Schicht des Halbleiter-Substrats bzw. auf gleicher axialer Höhe.

Gemäß einer Ausführungsform ist die Sendeeinheit in einem Halbleiter-Fertigungsprozess hergestellt und die Empfangseinheit ist in einem weiteren Halbleiter-Fertigungsprozess hergestellt, wobei die Empfangseinheit durch Bonding auf das Halbleiter-Substrat aufgebracht ist. Es kann also eine direkte elektrische Verbindung zwischen dem Halbleiter-Substrat und der Empfangseinheit bestehen. Die Empfangseinheit ist dann auf dem Halbleiter-Substrat der Sendeeinheit angeordnet. Es versteht sich, dass auch die Sendeeinheit auf dem Halbleiter-Substrat der Empfangseinheit angeordnet sein kann. Die vorstehenden Ausführungen gelten dementsprechend auch für ein Vertauschen von Sendeeinheit und Empfangseinheit. Diese Vorgehensweise bietet zusätzliche Freiheitsgrade im Herstellungsprozess. Beispielsweise können die Sendeeinheit und die Empfangseinheit aus unterschiedlichen Halbleiter-Materialien, insbesondere auf Basis unterschiedlicher Halbleiter-Wafer, gefertigt werden.

Gemäß einer Ausführungsform umfasst die Sendeeinheit eine Avalanche-LED, insbesondere eine Single-Photon-Avalanche-LED. Solche LEDs können im "high-voltage reverse breakdown avalanching mode" betrieben werden und weisen, im Vergleich zu anderen LEDs mit indirekter Bandlücke, eine bessere Quanteneffizienz auf. Silizium-basierte Avalanche-LEDs emittieren beispielsweise Licht mit Wellenlängen im nahen IR-Bereich.

Gemäß einer Ausführungsform umfasst die Sendeeinheit Silizium-Nanokristalle (SiNCs). Durch Variation des Durchmessers der SiNCs kann die Sendeeinheit Messlicht unterschiedlicher Wellenlängen aussenden, das heißt sie ist optisch durchstimmbar. Beispielsweise umfasst eine Silizium-LED der Sendeeinheit SiNCs mit einem mittleren Durchmesser zwischen 1 nm und 15 nm, insbesondere zwischen 1,5 nm und 5 nm. Insbesondere ist bekannt, dass Si-LEDs mit SiNCs mit einem mittleren Durchmesser zwischen 1,5 nm und 5 nm, insbesondere 4 nm, eine Elektrolumineszenz mit Wellenlängen zwischen 500 nm und 800 nm bei Raumtemperatur aufweisen. Die emittierte Wellenlänge kann nicht nur von dem mittleren Durchmesser der SiNCs, sondern auch von der Oberflächenpassivierung und den in den SiNCs vorhandenen Verunreinigungen bzw. der Dotierung abhängen.

Gemäß einer Ausführungsform ist die Sendeeinheit dazu ausgebildet, um gepulst betrieben zu werden. Die Sendeeinheit wird beispielsweise nur dann getriggert, wenn eine Positions-, Abstands- und/oder Winkelmessung mit dem optischen Encoder vorgenommen werden soll. Diese Vorgehensweise reduziert die durch die in der Sendeeinheit fließenden Ströme hervorgerufene Wärmeleistung und ist daher besonders energiesparend. Zudem wird dadurch die Lebensdauer der Sendeeinheit erhöht.

Gemäß einer Ausführungsform umfasst die Empfangseinheit mehrere Sensoren, die neben der Sendeeinheit oder um die Sendeeinheit herum angeordnet sind, bevorzugt in gleichem Abstand. Es ist beispielsweise eine Konfiguration möglich, bei der die Sensoren der Empfangseinheit kreisförmig um die Sendeeinheit herum angeordnet sind. Auch ist es denkbar, dass die Sensoren und die Sendeeinheit entlang einer Linie, d.h. kettenförmig angeordnet sind, wobei sich auf beiden Seiten der Sendeeinheit ein oder mehrere Sensoren befinden.

Gemäß einer Ausführungsform umfasst die Empfangseinheit, insbesondere zumindest einer der Sensoren, einen Photodetektor, insbesondere eine Avalanche-Photodiode. Avalanche-Photodioden sind besonders sensitiv, das heißt sie können auch kleinste Lichtmengen detektieren. Dies macht sie besonders kompatibel mit auf Silizium basierenden LEDs. Der bzw. die Sensoren können auf die Wellenlänge des von der Sendeeinheit ausgesandten Messlichts abgestimmt sein.

Gemäß einer Ausführungsform sind die Sendeeinheit und die Empfangseinheit auf derselben Seite des Halbleiter-Substrats angeordnet und in die gleiche Richtung ausgerichtet, wobei die Richtung bevorzugt parallel zur Oberflächennormale des Halbleiter-Substrats verläuft. Insbesondere basiert der optische Encoder auf dem Prinzip des Schattenwurfs, das heißt der optische Encoder ist kein auf Interferenz basierender optischer Encoder. Insbesondere umfasst der optische Encoder kein Interferenzgitter, das heißt der optische Encoder ist ein transmissives System.

Gemäß einer Ausführungsform ist der optische Encoder ein linearer optischer Encoder oder ein rotativer optischer Encoder.

Gemäß einer Ausführungsform umfasst der optische Encoder fernen einen Hohlspiegel, welcher an einer dem Halbleiter-Substrat gegenüberliegenden Seite des ersten Teils angeordnet und dazu ausgebildet ist, von der Sendeeinheit ausgesandtes und durch den ersten Teil, insbesondere durch einen Teil der Codierung und eine Codescheibe des ersten Teils, transmittiertes Messlicht in Richtung der Empfangseinheit zu reflektieren.

Die Eingangs genannte Aufgabe wird erfindungsgemäß auch durch die Merkmale des Anspruchs 14 gelöst.

Insbesondere wird die Aufgabe auch gelöst durch ein Verfahren zur Herstellung eines optischen Encoders gemäß zumindest einer der vorstehenden Ausführungsformen. Das Verfahren umfasst ein Anordnen zumindest einer Sendeeinheit zum Aussenden von Messlicht und zumindest einer Empfangseinheit zum Empfangen reflektierten Messlichts auf einem selben Halbleiter-Substrat. Das Halbleiter-Substrat und die Sendeeinheit bestehen im Wesentlichen aus einem indirekten Halbleitermaterial.

Die in Bezug auf den optischen Encoder beschriebenen Merkmale können beliebig mit den Merkmalen des Verfahrens kombiniert werden.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine vereinfachte Querschnittansicht eines optischen Encoders,
- Fig. 2: eine vereinfachte Detailansicht des optischen Encoders von Fig. 1, und
- Fig. 3: eine vereinfachte Draufsicht auf ein Halbleiter-Substrat eines optischen Encoders.

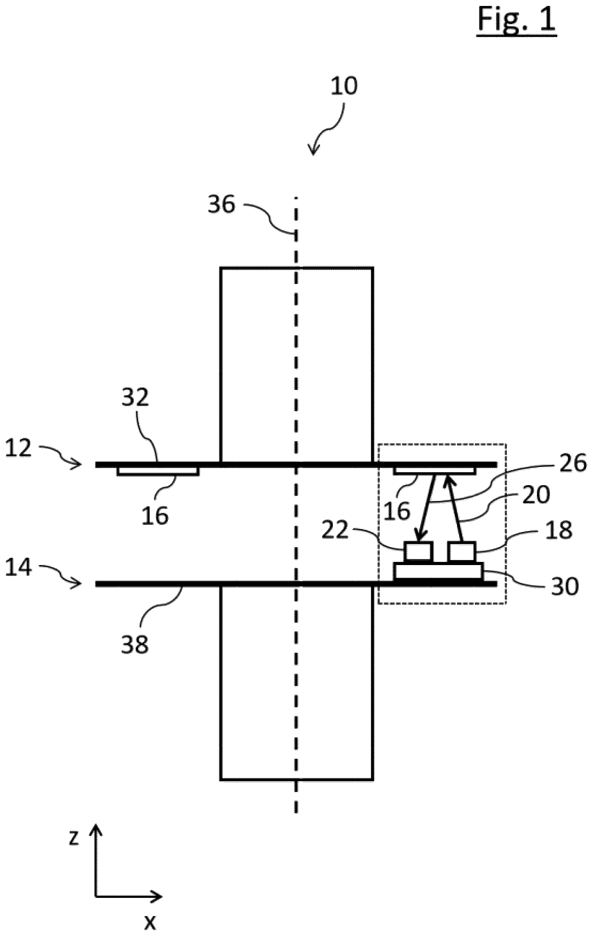

Der in der Fig. 1 gezeigte, reflexive optische Encoder 10 oder Drehgeber umfasst einen ersten Teil 12 und einen gegenüberliegend zu dem ersten Teil 12 angeordneten zweiten Teil 14. Der erste Teil 12 und der zweite Teil 14 sind relativ zueinander bewegbar und koaxial zueinander angeordnet. Insbesondere können der erste Teil 12 und/oder der zweite Teil 14 um eine Rotationsachse 36 gedreht werden (beispielsweise mittels einer nicht gezeigten elektrischen Antriebseinrichtung), um eine Messung durchzuführen.

Der erste Teil 12 weist eine Codescheibe 32 auf, die aus einem transparenten Material wie z.B. Glas besteht. Die Codescheibe 32 weist eine Codierung 16 auf, die mittels eines bekannten Abscheideverfahrens (wie z.B. Aufdampfen, Sputtern, o.ä.) auf der Codescheibe 32 aufgebracht ist. Die Codierung 16 ist kreisringförmig um die Rotationsachse 36 auf der Codescheibe 32 ausgebildet.

Der zweite Teil 14 des optischen Encoders 10 weist eine Leiterplatte 38 auf, auf der ein Halbleiter-Substrat 30 aufgebracht ist. In dem gezeigten Ausführungsbeispiel stellt die Leiterplatte 38 eine Art Trägerplatte oder Scheibe dar, die das Halbleiter-Substrat 30 trägt und im Wesentlichen denselben Durchmesser wie die Codescheibe 32 aufweist. Es ist jedoch auch denkbar, dass die Leiterplatte 38 kleiner als die Codescheibe ist und selbst wiederum auf einer weiteren Trägerscheibe des zweiten Teils 14 aufgebracht ist (nicht gezeigt).

Auf dem Halbleiter-Substrat 30 ist eine Sendeeinheit 18 zum Emittieren von Messlicht 20 in Richtung der Codierung 16 und eine Empfangseinheit 22 zum Empfangen reflektierten Messlichts 26 angeordnet. Die Sendeeinheit 18 und die Empfangseinheit 22 sind auf derselben Seite des Halbleiter-Substrats 30 angeordnet und in Richtung der axialen Richtung Z ausgerichtet. Die axiale Richtung Z verläuft parallel zur Oberflächennormale des Halbleiter-Substrats 30 und parallel zur Rotationsachse 36.

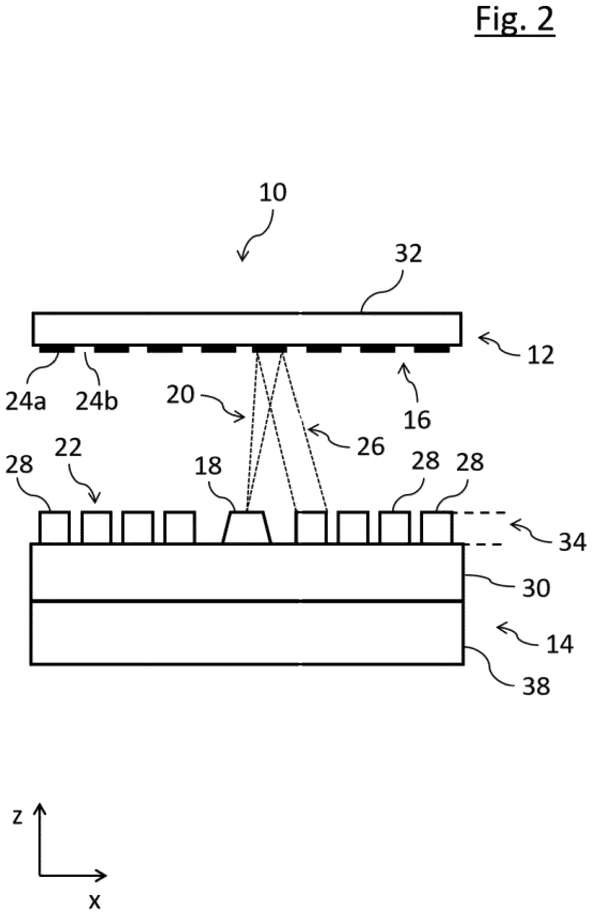

Wie besonders gut in der Detailansicht von Fig. 2 zu erkennen ist, die dem gestrichelten Kasten in Fig. 1 entspricht, umfasst die Codierung 16 erste Codeabschnitte 24a und zweite Codeabschnitte 24b, die jeweils in gleichem Abstand zueinander angeordnet sind und ein Strichmuster bilden, wobei das von der Sendeeinheit 18 emittierte Messlicht 20 von den ersten Codeabschnitten 24a reflektiert und durch die zweiten Codeabschnitte 24b und die Codescheibe 32 transmittiert wird. Das reflektierte Messlicht 26 trifft auf eine Mehrzahl von Sensoren 28 der Empfangseinheit 22 und die Empfangseinheit 22 ist dazu ausgebildet, auf Basis des empfangenen Messlichts 26 ein Messsignal zu erzeugen und auszugeben.

Eine nicht gezeigte Auswerteinheit ist dazu ausgebildet, auf Basis des von der Empfangseinheit 22 ausgegebenen Messsignals eine Relativposition zwischen dem ersten und dem zweiten Teil 12, 14 zu ermitteln. Die Auswerteinheit kann integraler Bestandteil des optischen Encoders 10 oder ein in Bezug auf den optischen Encoder 10 separates Bauteil sein.

Der optische Encoder kann des Weiteren einen nicht gezeigten Hohlspiegel aufweisen, welcher an einer dem Halbleiter-Substrat 30 gegenüberliegenden Seite des ersten Teils 12 angeordnet ist. Der Hohlspiegel reflektiert von der Sendeeinheit 18 ausgesandtes und durch die zweiten Codeabschnitte 24b der Codierung 16 und die Codescheibe 32 transmittiertes Messlicht in Richtung der Empfangseinheit 22.

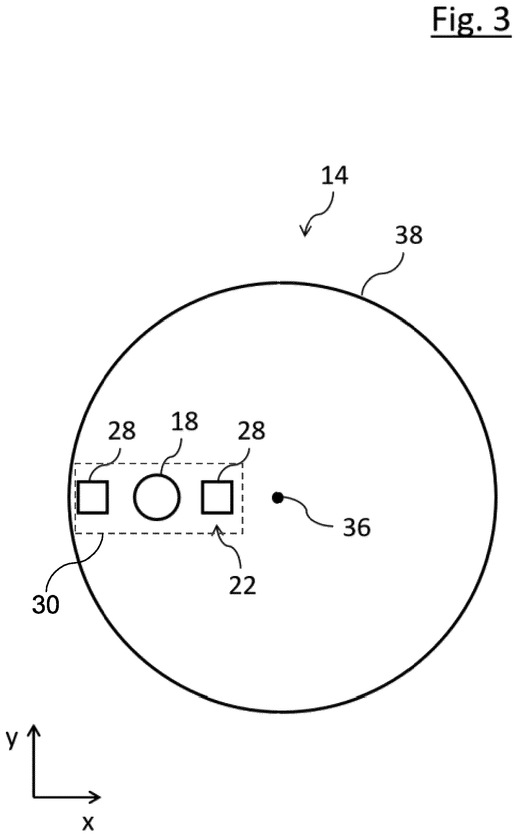

Wie in der in Fig. 3 gezeigten, stark vereinfachten Draufsicht auf den ersten Teil 14 des optischen Encoders 10 gezeigt ist, liegen die Sendeeinheit 18, die Sensoren 28 der Empfangseinheit 22 und die Rotationsachse 36 auf einer Linie, wobei die Sensoren 28 auf beiden Seiten der Sendeeinheit 18 angeordnet sind. Der Einfachheit halber sind hier nur zwei Sensoren 28 gezeigt. Es versteht sich jedoch, dass eine Mehrzahl von gleich beabstandeten Sensoren 28 zu beiden Seiten der Sendeeinheit 18 vorgesehen sein können (siehe Fig. 2). Ferner ist auch eine Konfiguration möglich, bei der die Sensoren 28 kreisförmig um die Sendeeinheit 18 herum angeordnet sind (nicht gezeigt). Dabei können die Sensoren 28 einen oder mehrere Kreise mit unterschiedlichen Radien um die Sendeeinheit 18 bilden.

Das Halbleiter-Substrat 30, die Sendeeinheit 18 und die Empfangseinheit 22 sind monolithisch ausgebildet und bestehen im Wesentlichen aus Silizium. Bevorzugt bestehen die optisch aktiven Komponenten der Sendeeinheit 18 und der Empfangseinheit 22 im Wesentlichen vollständig aus Silizium (bis auf Verunreinigungen). Das heißt die Empfangseinheit 22 und die Sendeeinheit 18 sind aus demselben Chip bzw. demselben Halbleiter-Substrat 30 hergestellt und in einem gemeinsamen Layer 34 des Halbleiter-Substrats 30 ausgebildet (siehe Fig. 2). Die Empfangseinheit 22, die Sendeeinheit 18 und das Halbleiter-Substrat 30 sind daher über eine zusammenhängende Kristallstruktur miteinander verbunden.

Zumindest ein Teil der Sendeeinheit 18 und zumindest ein Teil der Empfangseinheit 22, insbesondere deren optisch aktiven Komponenten, sind in einem selben Halbleiter-Fertigungsprozess hergestellt. Der Halbleiter-Fertigungsprozess ist bevorzugt ein Standard-CMOS-Prozess und umfasst beispielsweise ein Dotierverfahren, das Abscheiden von Oxid- und/oder Halbleiterschichten, nasschemisches Ätzen, Trockenätzen, das Aufbringen von optischen Lacken und/oder das Belichten von optischen Lacken.

Es ist aber auch denkbar, dass nur die Sendeeinheit 18 direkt aus dem Halbleiter-Substrat 30 hergestellt ist und die Empfangseinheit 22 anderweitig hergestellt ist und durch Bonding auf das Halbleiter-Substrat 30 aufgebracht ist. In diesem Fall sind nur die Sendeeinheit 18 und das Halbleiter-Substrat 30 monolithisch ausgebildet.

Die im Wesentlichen aus Silizium bestehende Sendeeinheit 18 ist eine (Single-Photon-)Avalanche-Photodiode bzw. (Single-Photon-)Avalanche-LED, die im "high-voltage reverse breakdown avalanching mode" betrieben werden kann.

Es ist auch denkbar, dass die Sendeeinheit 18 Silizium-Nanokristalle mit einem mittleren Durchmesser im Bereich weniger Nanometer umfasst, die in Abhängigkeit der Größe bzw. des Durchmessers der Kristalle Messlicht 20 verschiedener Wellenlängen emittieren kann. Die Sendeeinheit 18 kann gepulst oder kontinuierlich betrieben werden.

Die im Wesentlichen aus Silizium bestehenden Sensoren 28 der Empfangseinheit 22 sind Photodetektoren, die als Avalanche-Photodioden ausgebildet sein können.

Durch die erfindungsgemäße monolithische Integration von Sendeeinheit 18 und Empfangseinheit 22 auf demselben Si-Chip 30 können die Herstellungskosten des optischen Encoders 10 erheblich reduziert werden, da Lichtquelle und Empfänger in einem Standard CMOS-Prozess gefertigt werden können und automatisch zueinander ausgerichtet sind. Ferner wird durch die Integration der Lichtquelle auf dem Empfänger-Chip wird weniger Platz benötigt, was den optischen Encoder 10 insgesamt kompakter macht.

### Bezugszeichenliste

- 10: optischer Encoder
- 12: erster Teil
- 14: zweiter Teil
- 16: Codierung
- 18: Sendeeinheit
- 20: ausgesandtes Messlicht
- 22: Empfangseinheit
- 24a, 24b: erste und zweite Codeabschnitte
- 26: reflektiertes Messlicht
- 28: Sensor
- 30: Halbleiter-Substrat
- 32: Codescheibe
- 34: Layer
- 36: Rotationsachse
- 38: Leiterplatte
- Z: axiale Richtung

## Patentansprüche

1. Optischer Encoder (10), umfassend:
einen ersten Teil (12) und einen zweiten Teil (14), welche relativ zueinander bewegbar sind;
eine an dem ersten Teil (12) angeordnete Codierung (16);
zumindest eine an dem zweiten Teil (14) angeordnete Sendeeinheit (18), die dazu ausgebildet ist, Messlicht (20) in Richtung der Codierung (16) zu senden;
zumindest eine an dem zweiten Teil (14) angeordnete Empfangseinheit (22), die dazu ausgebildet ist, Messlicht (26), das von der Sendeeinheit (18) ausgesandt und von zumindest einem Teil der Codierung (16) reflektiert wurde, zu empfangen und auf Basis des empfangenen Messlichts (26) ein Messsignal zu erzeugen und auszugeben; und
zumindest eine Auswerteinheit, die dazu ausgebildet ist, auf Basis des ausgegebenen Messsignals eine Relativposition zwischen dem ersten und dem zweiten Teil (12, 14) zu ermitteln,
wobei die Sendeeinheit (18) und die Empfangseinheit (22) auf demselben Halbleiter-Substrat (30) angeordnet sind, wobei das Halbleiter-Substrat (30) Teil des optischen Encoders (10) ist,
**dadurch gekennzeichnet, dass**
das Halbleiter-Substrat (30) und die Sendeeinheit (18) im Wesentlichen aus einem indirekten Halbleitermaterial bestehen.

2. Optischer Encoder (10) nach Anspruch 1,
wobei das indirekte Halbleitermaterial Silizium ist.

3. Optischer Encoder (10) nach Anspruch 1 oder 2,
wobei das Halbleiter-Substrat (30), zumindest ein Teil der Sendeeinheit (18) und/oder zumindest ein Teil der Empfangseinheit (22) monolithisch ausgebildet sind.

4. Optischer Encoder (10) nach zumindest einem der vorstehenden Ansprüche,
wobei zumindest ein Teil der Sendeeinheit (18) und/oder zumindest ein Teil der Empfangseinheit (22) in einem selben Halbleiter-Fertigungsprozess, insbesondere CMOS-Prozess, hergestellt sind,
und/oder wobei zumindest ein Teil der Sendeeinheit (18) und zumindest ein Teil der Empfangseinheit (22) zumindest ein gemeinsames Layer (34) des Halbleiter-Substrats (30) aufweisen.

5. Optischer Encoder (10) nach zumindest einem der Ansprüche 1 bis 3, wobei die Sendeeinheit (18) in einem Halbleiter-Fertigungsprozess hergestellt ist und die Empfangseinheit (22) in einem weiteren Halbleiter-Fertigungsprozess hergestellt ist, wobei die Empfangseinheit (22) durch Bonding auf das Halbleiter-Substrat (30) aufgebracht ist.

6. Optischer Encoder (10) nach zumindest einem der vorstehenden Ansprüche,
wobei die Sendeeinheit (18) eine Avalanche-LED, insbesondere eine Single-Photon-Avalanche-LED, umfasst.

7. Optischer Encoder (10) nach zumindest einem der vorstehenden Ansprüche,
wobei die Sendeeinheit (18) Silizium-Nanokristalle umfasst, insbesondere wobei die Silizium-Nanokristalle einen mittleren Durchmesser zwischen 1 nm und 15 nm, bevorzugt zwischen 1,5 und 5 nm, aufweisen.

8. Optischer Encoder (10) nach zumindest einem der vorstehenden Ansprüche,
wobei die Sendeeinheit (18) dazu ausgebildet ist, um gepulst betrieben zu werden.

9. Optischer Encoder (10) nach zumindest einem der vorstehenden Ansprüche,
wobei die Empfangseinheit (22) mehrere Sensoren (28) umfasst, die neben der Sendeeinheit (18) oder um die Sendeeinheit (18) herum angeordnet sind, bevorzugt in gleichem Abstand.

10. Optischer Encoder (10) nach zumindest einem der vorstehenden Ansprüche,
wobei die Empfangseinheit (22), insbesondere zumindest einer der Sensoren (28), einen Photodetektor, insbesondere eine Avalanche-Photodiode, umfasst.

11. Optischer Encoder (10) nach zumindest einem der vorstehenden Ansprüche,
wobei die Sendeeinheit (18) und die Empfangseinheit (22) auf derselben Seite des Halbleiter-Substrats (30) angeordnet sind und in die gleiche Richtung (Z) ausgerichtet sind, wobei die Richtung (Z) bevorzugt parallel zur Oberflächennormale des Halbleiter-Substrats (30) verläuft.

12. Optischer Encoder (10) nach zumindest einem der vorstehenden Ansprüche,
wobei der optische Encoder (10) ein linearer optischer Encoder oder ein rotativer optischer Encoder ist.

13. Optischer Encoder (10) nach zumindest einem der vorstehenden Ansprüche, ferner umfassend einen Hohlspiegel, welcher an einer dem Halbleiter-Substrat (30) gegenüberliegenden Seite des ersten Teils (12) angeordnet und dazu ausgebildet ist, von der Sendeeinheit (18) ausgesandtes und durch den ersten Teil (12), insbesondere durch einen Teil (24b) der Codierung (16) und eine Codescheibe (32) des ersten Teils (12), transmittiertes Messlicht in Richtung der Empfangseinheit (22) zu reflektieren.

14. Verfahren zur Herstellung eines optischen Encoders (10) gemäß zumindest einem der vorstehenden Ansprüche, das Verfahren umfassend:
Anordnen zumindest einer Sendeeinheit (18) zum Aussenden von Messlicht (20) und zumindest einer Empfangseinheit (22) zum Empfangen reflektierten Messlichts (26) auf einem selben Halbleiter-Substrat (30), wobei das Halbleiter-Substrat (30) Teil des optischen Encoders (10) ist,
**dadurch gekennzeichnet, dass**
das Halbleiter-Substrat (30) und die Sendeeinheit (18) im Wesentlichen aus einem indirekten Halbleitermaterial bestehen.

15. Verfahren nach Anspruch 14,
wobei das Anordnen das Ausführen eines CMOS-Prozesses umfasst.

## Claims

1. An optical encoder (10), comprising:
a first part (12) and a second part (14) which are movable relative to one another;
a coding (16) arranged at the first part (12);
at least one transmission unit (18) which is arranged at the second part (14) and which is configured to transmit measurement light (20) in the direction of the coding (16);
at least one reception unit (22) which is arranged at the second part (14) and which is configured to receive measurement light (26), which was transmitted by the transmission unit (18) and reflected by at least one part of the coding (16), and to generate and output a measurement signal on the basis of the received measurement light (26); and
at least one evaluation unit which is configured to determine a relative position between the first and the second part (12, 14) on the basis of the output measurement signal,
wherein the transmission unit (18) and the reception unit (22) are arranged on the same semiconductor substrate (30), wherein the semiconductor substrate (30) is part of the optical encoder (10),
**characterized in that**
the semiconductor substrate (30) and the transmission unit (18) substantially consist of an indirect semiconductor material.

2. An optical encoder (10) according to claim 1,
wherein the indirect semiconductor material is silicon.

3. An optical encoder (10) according to claim 1 or 2,
wherein the semiconductor substrate (30), at least one part of the transmission unit (18) and/or at least one part of the reception unit (22) is/are formed monolithically.

4. An optical encoder (10) according to at least one of the preceding claims, wherein at least one part of the transmission unit (18) and/or at least one part of the reception unit (22) is/are manufactured in the same semiconductor production process, in particular a CMOS process, and/or wherein at least one part of the transmission unit (18) and at least one part of the reception unit (22) have at least one common layer (34) of the semiconductor substrate (30).

5. An optical encoder (10) according to at least one of the claims 1 to 3,
wherein the transmission unit (18) is manufactured in a semiconductor production process and the reception unit (22) is manufactured in a further semiconductor production process, wherein the reception unit (22) is applied to the semiconductor substrate (30) by bonding.

6. An optical encoder (10) according to at least one of the preceding claims, wherein the transmission unit (18) comprises an avalanche LED, in particular a single-photon avalanche LED.

7. An optical encoder (10) according to at least one of the preceding claims, wherein the transmission unit (18) comprises silicon nanocrystals, in particular wherein the silicon nanocrystals have an average diameter between 1 nm and 15 nm, preferably between 1.5 and 5 nm.

8. An optical encoder (10) according to at least one of the preceding claims, wherein the transmission unit (18) is configured to be operated in a pulsed manner.

9. An optical encoder (10) according to at least one of the preceding claims, wherein the reception unit (22) comprises a plurality of sensors (28) which are arranged next to the transmission unit (18) or around the transmission unit (18), preferably at an equal distance.

10. An optical encoder (10) according to at least one of the preceding claims, wherein the reception unit (22), in particular at least one of the sensors (28), comprises a photodetector, in particular an avalanche photodiode.

11. An optical encoder (10) according to at least one of the preceding claims, wherein the transmission unit (18) and the reception unit (22) are arranged at the same side of the semiconductor substrate (30) and are oriented in the same direction (Z), wherein the direction (Z) preferably extends in parallel with the surface normal of the semiconductor substrate (30).

12. An optical encoder (10) according to at least one of the preceding claims, wherein the optical encoder (10) is a linear optical encoder or a rotary optical encoder.

13. An optical encoder (10) according to at least one of the preceding claims, further comprising a concave mirror which is arranged at a side of the first part (12) disposed opposite the semiconductor substrate (30) and which is configured to reflect measurement light, which is emitted by the transmission unit (18) and transmitted through the first part (12), in particular through a part (24b) of the coding (16) and a code disk (32) of the first part (12), in the direction of the reception unit (22).

14. A method of manufacturing an optical encoder (10) according to at least one of the preceding claims, the method comprising:
arranging at least one transmission unit (18) for transmitting measurement light (20) and at least one reception unit (22) for receiving reflected measurement light (26) on the same semiconductor substrate (30), wherein the semiconductor substrate (30) is part of the optical encoder (10),
**characterized in that**
the semiconductor substrate (30) and the transmission unit (18) substantially consist of an indirect semiconductor material.

15. A method according to claim 14,
wherein the arranging comprises executing a CMOS process.

## Revendications

1. Codeur optique (10) comprenant :
une première partie (12) et une deuxième partie (14) qui sont mobiles l'une par rapport à l'autre ;
un codage (16) disposé sur la première partie (12) ;
au moins une unité d'émission (18) mise en place sur la deuxième partie (14) et conçue pour émettre une lumière de mesure (20) en direction du codage (16) ;
au moins une unité de réception (22) mise en place sur la deuxième partie (14) et conçue pour recevoir la lumière de mesure (26), émise par l'unité d'émission (18) et réfléchie par au moins une partie du codage (16), et pour générer et émettre un signal de mesure sur la base de la lumière de mesure (26) reçue ; et
au moins une unité d'évaluation conçue pour déterminer, sur la base du signal de mesure émis, une position relative entre la première et la deuxième partie (12, 14),
l'unité d'émission (18) et l'unité de réception (22) étant mises en place sur le même substrat semi-conducteur (30), le substrat semi-conducteur (30) faisant partie du codeur optique (10),
**caractérisé en ce que**
le substrat semi-conducteur (30) et l'unité d'émission (18) sont constitués sensiblement d'un matériau semi-conducteur indirect.

2. Codeur optique (10) selon la revendication 1,
dans lequel le matériau semi-conducteur indirect est du silicium.

3. Codeur optique (10) selon la revendication 1 ou 2,
dans lequel le substrat semi-conducteur (30), au moins une partie de l'unité d'émission (18) et/ou au moins une partie de l'unité de réception (22) sont réalisés de manière monolithique.

4. Codeur optique (10) selon l'une au moins des revendications précédentes, dans lequel au moins une partie de l'unité d'émission (18) et/ou au moins une partie de l'unité de réception (22) sont fabriquées dans un même processus de fabrication de semi-conducteurs, en particulier un processus CMOS,
et/ou au moins une partie de l'unité d'émission (18) et au moins une partie de l'unité de réception (22) comportent au moins une couche commune (34) du substrat semi-conducteur (30).

5. Codeur optique (10) selon l'une au moins des revendications 1 à 3,
dans lequel l'unité d'émission (18) est fabriquée dans un processus de fabrication de semi-conducteurs, et l'unité de réception (22) est fabriquée dans un autre processus de fabrication de semi-conducteurs, l'unité de réception (22) étant appliquée par métallisation sur le substrat semi-conducteur (30).

6. Codeur optique (10) selon l'une au moins des revendications précédentes, dans lequel l'unité d'émission (18) comprend une DEL à avalanche, en particulier une DEL à avalanche à photon unique.

7. Codeur optique (10) selon l'une au moins des revendications précédentes, dans lequel l'unité d'émission (18) comprend des nanocristaux de silicium, en particulier, les nanocristaux de silicium ont un diamètre moyen compris entre 1 nm et 15 nm, de préférence entre 1,5 et 5 nm.

8. Codeur optique (10) selon l'une au moins des revendications précédentes, dans lequel l'unité d'émission (18) est conçue pour fonctionner en mode pulsé.

9. Codeur optique (10) selon l'une au moins des revendications précédentes, dans lequel l'unité de réception (22) comprend plusieurs capteurs (28) disposés à côté de l'unité d'émission (18) ou autour de l'unité d'émission (18), de préférence de façon équidistante.

10. Codeur optique (10) selon l'une au moins des revendications précédentes, dans lequel l'unité de réception (22), en particulier l'un au moins des capteurs (28), comprend un photodétecteur, en particulier une photodiode à avalanche.

11. Codeur optique (10) selon l'une au moins des revendications précédentes, dans lequel l'unité d'émission (18) et l'unité de réception (22) sont mises en place du même côté du substrat semi-conducteur (30) et sont orientées dans la même direction (Z), la direction (Z) étant de préférence parallèle à la normale à la surface du substrat semi-conducteur (30).

12. Codeur optique (10) selon l'une au moins des revendications précédentes, dans lequel le codeur optique (10) est un codeur optique linéaire ou un codeur optique rotatif.

13. Codeur optique (10) selon l'une au moins des revendications précédentes, comprenant en outre un miroir concave qui est disposé sur un côté de la première partie (12) opposé au substrat semi-conducteur (30) et qui est conçu pour réfléchir en direction de l'unité de réception (22) la lumière de mesure émise par l'unité d'émission (18) et transmise à travers la première partie (12), en particulier à travers une partie (24b) du codage (16) et un disque à code (32) de la première partie (12).

14. Procédé de fabrication d'un codeur optique (10) selon l'une au moins des revendications précédentes, le procédé comprenant :
la mise en place, sur un même substrat semi-conducteur (30), d'au moins une unité d'émission (18) conçue pour émettre une lumière de mesure (20) et d'au moins une unité de réception (22) conçue pour recevoir la lumière de mesure réfléchie (26), le substrat semi-conducteur (30) faisant partie du codeur optique (10),
**caractérisé en ce que**
le substrat semi-conducteur (30) et l'unité d'émission (18) sont constitués sensiblement d'un matériau semi-conducteur indirect.

15. Procédé selon la revendication 14,
dans lequel la mise en place comprend l'exécution d'un processus CMOS.
